# EUROPÄISCHE PATENTSCHRIFT

(11) **EP 2 177 137 B1**
(45) Veröffentlichungstag und Bekanntmachung des Hinweises auf die Patenterteilung: **18.01.2012**
(21) Anmeldenummer: 09012353.0
(22) Anmeldetag: 29.09.2009
(51) Int. Cl.: A47J 31/54

(54) **Elektrische Getränkebereitungsmaschine mit einer Steuereinheit**
Electric drink preparation machine with a control unit
Machine de préparation de boissons électrique dotée d'une unité de commande

(30) Priorität: 15.10.2008 DE 202008013555 U
(43) Veröffentlichungstag der Anmeldung: 21.04.2010
(73) Patentinhaber: Eugster/Frismag AG, 8580 Amriswil (CH)
(72) Erfinder: Zwahlen, Christof, 9428 Walzenhausen (CH)
(74) Vertreter: Schubert, Siegmar

(56) Entgegenhaltungen:
- EP-A- 0 362 954
- EP-A- 1 854 386

## Beschreibung

Die Erfindung betrifft eine elektrische Getränkebereitungsmaschine mit einer Steuereinheit nach dem Oberbegriff des Anspruchs 1.

Derartige elektrische Getränkebereitungsmaschinen können zum Zubereiten von Kaffee und/oder Espresso und/oder Dampf und/oder heißem Wasser und/oder heißer Milch und/oder geschäumter Milch ausgebildet sein, wozu eine oder mehrere Funktionseinheiten der Getränkebereitungsmaschine dienen.

Aus praktischen Gründen sind die elektrischen Getränkebereitungsmaschinen meist ständig über einen Stecker mit einem Stromnetz verbunden, um hinsichtlich der elektrischen Energieversorgung stets betriebsbereit zu sein. Andererseits sollen die Getränkebereitungsmaschinen, wenn sie nicht zur Getränkebereitung bzw. Getränkebereitstellung eingeschaltet sind, im sogenannten Stand-by-Zustand möglichst keine Energie aus dem Stromnetz aufnehmen. Bei einem willkürlichen Abschalten der Getränkebereitungsmaschine durch eine Bedienungsperson soll vermieden werden, dass Betriebsstörungen oder im äußersten Fall Beschädigungen der Getränkebereitungsmaschine dadurch auftreten, dass diese in einer zum Abschalten ungeeigneten Betriebsphase abgeschaltet wird.

Um diese Ziele zu erreichen, ist bereits eine Getränkebereitungsmaschine bekannt (EP 1 854 386 A1), die eine elektrische betreibbare Steuereinheit, mindestens eine elektrische betreibbare Funktionseinheit zur Durchführung mindestens eines zum Bereiten bzw. Bereitstellen des Getränks beteiligten Prozesses, wobei die Steuereinheit mit mindestens einer Funktionseinheit in signal- bzw. datenübertragender Verbindung steht, sowie einen Stromkreis zur Stromversorgung der Funktionseinheit und der Steuereinheit umfasst, in dem ein erster Schaltkontakt und ein zweiter Schaltkontakt parallel geschaltet sind. Ein Betätigungselement, insbesondere ein manuell bedienbarer Taster, wirkt mit dem ersten Schaltkontakt insbesondere derart zusammen, dass dieser durch eine erste Betätigung des Betätigungselemente einen geschlossenen Zustand annimmt und nach einer zweiten Betätigung einen offenen Zustand annimmt. Hingegen wird der zweite Schaltkontakt von der Steuereinheit mit einem Steuersignal gesteuert, um entweder einen geschlossenen oder einen offenen Zustand anzunehmen. Mit der Steuereinheit wirken Erfassungsmittel zum Erfassen einer Betätigung des Betätigungselements des ersten Schaltkontakts so zusammen, dass die Betätigungsfolge von der Steuereinheit registriert wird. Die Steuereinheit ist so ausgebildet, dass sie nach einer ersten Betätigung des Betätigungselements ein Steuersignal abgibt, welches den zweiten Schaltkontakt in den geschlossenen Zustand versetzt, oder nach Registrieren einer zweiten Betätigung des Betätigungselements ein Steuersignal bereitstellt, mit dem der zweite Schaltkontakt geöffnet wird, unter der Voraussetzung, dass entsprechend einem Signal der Funktionseinheit an die Steuereinheit, die Funktionseinheit zum Abschalten bereit ist oder, unter der Voraussetzung, dass eine vorbestimmte Verzögerungszeit vergangen ist, die ebenfalls von der Steuereinheit erfasst wird. Der zweite Schaltkontakt ist insbesondere ein Schließkontakt eines Relais. Der erste Schaltkontakt kann ein Impulsschaltkontakt oder ein Dauerschaltkontakt sein. Die Erfassungsmittel können einen dritten Schaltkontakt umfassen, der bei einer Betätigung des Betätigungselements von einem offenen Zustand in einen geschlossenen Zustand oder umgekehrt übergeht. Statt des dritten Schaltkontakts kann auch ein Sensor vorgesehen sein. In jedem dieser konkreten Fälle bedingt die Realisierung der von dem ersten Schaltkontakt galvanisch getrennten Erfassungsmittel, insbesondere der dritte Schaltkontakt, einen nicht unerheblichen Zusatzaufwand.

Der Erfindung liegt daher die Aufgabe zugrunde, den technischen Aufwand für die Erfassungsmittel einer Getränkebereitungsmaschine der eingangs genannten Gattung zum Erreichen der vorstehend genannten Ziele und Insbesondere unter Beibehaltung der zuverlässigen Abschaltfunktion herabzusetzen.

Diese Aufgabe wird für eine elektrische Getränkebereitungsmaschine mit den in Anspruch 1 angegebenen Merkmalen gelöst.

Somit entfällt in den Erfassungsmitteln ein von dem ersten Schaltkontakt galvanisch getrenntes zusätzliches Steuerelement, insbesondere ein dritter Schaltkontakt, der zusammen mit dem ersten Schaltkontakt mittels des Betätigungselements betätigbar ist, d.h. geschaltet wird, oder ein entsprechender Sensor. Vielmehr genügt es, dass der erste Schaltkontakt als Wechselkontakt nicht nur mit dem Stromversorgungskontakt ausgebildet ist, der mit dem Stromversorgungskreis in elektrischer Verbindung steht, um bei einer ersten Betätigung des Betätigungselements eine anfängliche Stromversorgung der Steuereinheit und der Funktionseinheit zu übernehmen, sondern mit einem weiteren festen Kontakt, nämlich dem Steuerkontakt ausgebildet ist, der das mit einem Eingang der Steuereinheit in Verbindung stehende Erfassungselement der die Betätigung des Betätigungselements erfassenden Erfassungsmittel bildet. Die zur Erfassung der Betätigung des Betätigungselements maßgebende Kontaktierung des Steuerkontakts ist zwangsweise durch Ausbildung des ersten Schaltkontakts als Wechselkontakt gewährleistet, indem der Steuerkontakt durch den ersten Schaltkontakt wechselweise, d.h. umgekehrt bezüglich des Stromversorgungskontaktes kontaktiert bzw. nicht kontaktiert wird.

Eine weitere Vereinfachung kann dadurch eintreten, dass ein Schalter, dessen Bestandteil der erste Schaltkontakt ist, und der durch das Betätigungselement betätigbar ist, nicht in der Weise ausgebildet zu sein bracht, dass sich der erste Schaltkontakt bei einer ersten Betätigung des Betätigungselements anders verhält als bei einer zweiten Betätigung, insbesondere bei einer ersten Betätigung geschlossen wird und bei einer zweiten Betätigung geöffnet wird. Vielmehr kann nach Anspruch 2 der erste Schaltkontakt bei jeder Betätigung des Betätigungselements in gleicher Weise wirksam sein, indem er dergestalt als Wechseltastkontakt ausgebildet ist, dass er bei nicht betätigtem Betätigungselement den Steuerkontakt kontaktiert und den Stromversorgungskontakt, der an den stromkreis, vorzugsweise an einen nicht abschaltbaren Zweig des Stromkreises zur Stromversorgung angeschlossen ist, nicht kontaktiert, wogegen er bei betätigtem Betätigungselement den Stromversorgungskontakt kurzzeitig kontaktiert und den Steuerkontakt dementsprechend nicht kontaktiert. Unter kurzzeitig kann insbesondere ein Intervall von mindestens 200 Millisekunden zum Einschalten der Stromversorgung verstanden werden und ein Intervall von mindestens 100 Millisekunden zum Abschalten.

Zum kurzzeitigen Kontaktieren des Stromversorgungskontakts des ersten Schaltkontakts ist dieser nach Anspruch 3 als Tastkontakt ausgebildet.

Gemäß Anspruch 4 sind die Erfassungsmittel und die mit diesen in signalübertragender Verbindung stehende Steuereinheit, wie an sich bekannt, geeignet, dass in der Steuereinheit eine Betätigungsabfolge des Betätigungselements registriert wird. Davon ausgehend soll die Steuereinheit jeweils nach Registrierung einer ersten von zwei aufeinanderfolgenden Betätigungen ein Steuersignal erzeugen, durch das der zweite Schaltkontakt geschlossen wird, der somit die Stromversorgung übernimmt. Hingegen soll die Steuereinheit jeweils nach Registrierung einer zweiten von zwei aufeinanderfolgenden Betätigungen und abhängig von dem Funktionszustand der mindestens einen Funktionseinheit und/oder zeitlich, beispielsweise um ein festes Zeitintervall, verzögert ein Steuersignal generieren, durch das der zweite Schaltkontakt geöffnet wird und die Stromversorgung abgeschaltet wird. Das vorstehend genannte Verzögerungsintervall kann auch abhängig von dem Betriebszustand der Getränkebereitungsmaschine zum Zeitpunkt der Betätigung des Betätigungselements bestimmt werden.

Der zweite Schaltkontakt kann nach Anspruch 5, wie an sich bekannt, der Schließkontakt eines Relais sein.

Nach Anspruch 6 steht eine Relaisspule des Relais über eine Steuerleitung und gegebenenfalls über einen gesteuerten Schalter mit einem Ausgang der Steuereinheit in elektrischer Verbindung, so dass die Relaisspule über den gesteuerten Schalter mit der Stromversorgung verbunden wird und erregt wird.

Der zweite Schaltkontakt kann alternativ nach Anspruch 7 ein Halbleiterschalter sein, der über eine Steuerleitung durch das Steuersignal von der Steuereinheit gesteuert ist, so dass der abschaltbare Zweig des Stromversorgungskreises über den gesteuerten Schalter mit dem nicht abschaltbaren Teil des Stromversorgungskreises bzw. dem Netz verbunden wird.

In jedem Fall wird der zweite Schaltkontakt nicht direkt durch Betätigung des Betätigungselements geöffnet oder geschlossen, sondern nach Verarbeitung der mit den Erfassungsmitteln erfassten Betätigung nur nach Auswertung eines entsprechenden Betätigungssignals in der Steuereinheit.

Die Steuereinheit ist nach Anspruch 8 zweckmäßig eine Hauptsteuereinheit (MCU), mit der nicht nur die Stromversorgung der Getränkebereitungsmaschine insgesamt gesteuert wird, sondern auch individuell die jeweils durchzuführenden Funktionen in der mindestens einen elektrischen Funktionseinheit.

Da die Getränkebereitungsmaschine einschließlich der Steuereinheit, welche die Ein- und -ausschaltvorgänge steuert, jeweils nach Ausschalten vollständig von dem Stromversorgungsnetz abgetrennt sind, um Energie zu sparen, wird die Getränkebereitungsmaschine zweckmäßig nach Anspruch 9 durch eine Akkueinheit erweitert, der die Steuereinheit und eine Echtzeituhr vor einer ersten Betätigung des Betätigungselements alternativ zum Stromnetz speist. Die Steuereinheit ist in diesem Fall geeignet, derart mit der Echtzeituhr zusammenzuwirken, dass die Getränkebereitungsmaschine durch die Steuereinheit und die Echtzeituhr selbsttätig zu einer voreingestellten Zeit gestartet wird. Damit ist ein Starten ohne Bedienungsperson, z.B. am Morgen eines Tages, möglich.

Die Erfindung wird im Folgenden anhand einer Zeichnung mit einer Figur weiter erläutert, woraus sich Weiterbildungen und Einzelheiten der Erfindung ergeben können. Es zeigt:

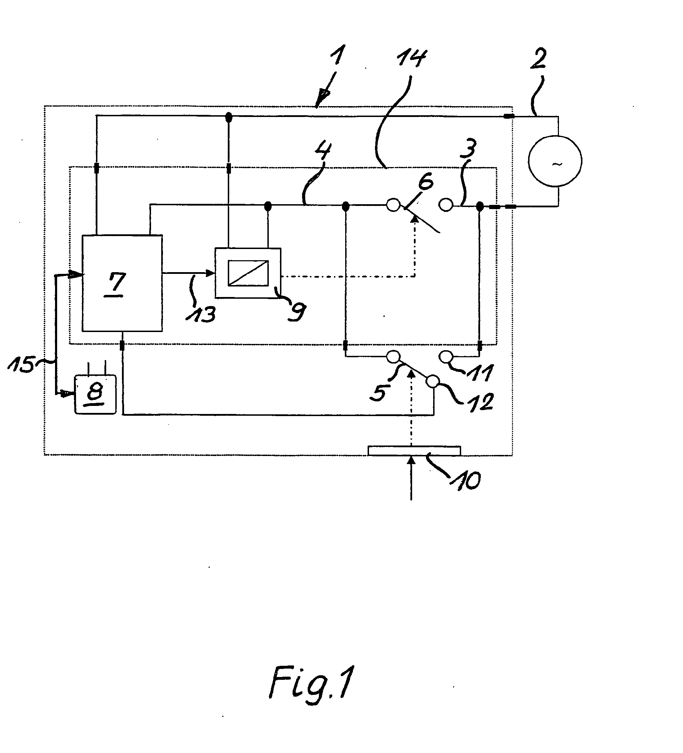

- Figur 1: eine schematische Schaltungsanordnung einer erfin- dungsgemäßen Getränkebereitungsmaschine.

In Figur 1 ist mit 1 schematisch in einer unterbrochenen Umrandung der elektrische Teil einer Getränkebereitungsmaschine dargestellt, insbesondere eine Kaffee- bzw. Espressomaschine, die an ein externes Stromversorgungsnetz 2 über nicht bezeichnete Anschlüsse angeschlossen werden kann.

In der Getränkebereitungsmaschine ist ein Stromversorgungskreis mit einem nicht abschaltbaren Zweig 3 und einem abschaltbaren Zweig 4 ausgebildet, wobei zwischen dem abschaltbare Zweig 4 und dem nicht abschaltbaren Zweig 3 eine Parallelschaltung eines ersten Schaltkontakts 5 und eines zweiten Schaltkontakts 6 angeordnet ist.

Der abschaltbare Zweig 4 des Stromversorgungskreises versorgt eine Hauptsteuereinheit 7, mindestens eine Funktionseinheit 8 sowie eine Relaisspule mit Ansteuerung 9.

Der als Wechseltastkontakt ausgebildete erste Schaltkontakt 5 ist in dem vorliegenden Ausführungsbeispiel Bestandteil eines Mikroschalters, der eine Taste 10 aufweist, mit dem der erste Schaltkontakt 5 manuell betätigt werden kann. Der erste Schaltkontakt 5 umfasst ausser einem nicht bezeichneten beweglichen Kontaktstück, welches in dem vorliegenden Ausführungsbeispiel an den abschaltbaren Zweig 4 des Stromversorgungskreises angeschlossen ist, einen Stromversorgungskontakt 11 an dem nicht abschaltbaren Zweig 3 des Stromversorgungskreises der als Tastkontakt ausgebildet ist, um bei Betätigung der Taste 10 den Stromversorgungskontakt 11 während der Betätigungsdauer zu schließen, sowie einen als Ruhekontakt angeordneten Steuerkontakt 12, der wechselweise zu dem Stromversorgungskontakt 11 mit dem beweglichen Kontaktstück des ersten Schaltkontakts 5 kontaktiert wird, wenn die Taste nicht betätigt ist bzw. in Ruhestellung des ersten Schaltkontakts.

Der an einen Eingang der Hauptsteuereinheit 7 angeschlossenen Steuerkontakt 12 ist ein Element von Erfassungsmitteln, mit denen eine Betätigung bzw. eine Betätigungsfolge der Taste 10 erfasst wird und in der Hauptsteuereinheit 7 ausgewertet wird.

Der zweite Schaltkontakt 6 ist als Schließkontakt der Relaisspule 9 ausgebildet und ebenso wie der erste Schaltkontakt 5 geeignet, den abschaltbaren Zweig 4 des Stromversorgungskreises mit dem nicht abschaltbaren Zweig 3 zu verbinden. Der zweite Schaltkontakt 6 wird nach Maßgabe eines Steuersignals geschlossen, welches in der Hauptsteuereinheit 7 gebildet wird und über eine Steuerleitung 13 beispielsweise einem in der Zeichnung nicht dargestellten gesteuerten Schalter zugeführt wird, der die Relaisspule 9 mit dem abschaltbaren Zweig 4 des Stromversorgungskreises verbindet.

Die Struktur der Hauptsteuereinheit 7 ergibt sich aus der Funktionsbeschreibung weiter unten.

Außer der Hauptsteuereinheit 7 und der Relaisspule 9 als Bestandteile der Getränkebereitungsmaschine 1 gehört zu dieser mindestens eine Funktionseinheit 8, die ebenfalls aus dem abschaltbaren Zweig 4 des Stromversorgungskreises gespeist werden kann. Die Funktionseinheit 8 oder auch mehrere solcher Funktionseinheiten können, durch die Hauptsteuereinheit 7 über eine Funktionssteuerleitung 15 gesteuert, einzelne Prozesse bzw. Funktionen bei der Zubereitung eines Getränks durchführen, z.B. Mahlen von Kaffee, Erhitzen von Wasser, Brühen von Kaffee, Bereiten von Dampf sowie Hilfsfunktionen.

Bei der nachfolgenden Funktionsbeschreibung wird von der in Figur 1 dargestellten Ruhelage des ersten Schaltkontakts 5 ausgegangen, aus der eine erste Betätigung einer Betätigungsfolge stattfindet, bei der sich die Vorgänge nach jeder zweiten Betätigung wiederholen.

Bei der ersten Betätigung der Taste 10 wechselt der erste Schaltkontakt 5 seine Stellung, wobei er den Stromversorgungskontakt 11 kurzzeitig kontaktiert und den abschaltbaren Zweig 4 des Stromversorgungskreises mit dem nicht abschaltbaren Zweig 3 bzw. mit dem Stromversorgungsnetz 2 anfänglich verbindet. Gleichzeitig öffnet der erste Schaltkontakt 5 die Verbindung zu dem Steuerkontakt 12, wodurch ein Betätigungssignal an dem dafür vorgesehenen Eingang der Hauptsteuereinheit 7 ansteht, welche das Betätigungssignal als Einschaltsignal bzw. erstes Signal einer Signalfolge registriert und demzufolge ein Steuersignal bereitstellt, welches über der Steuerleitung 3 zu dem nicht dargestellten gesteuerten Schalter gelangt, der die Relaisspule 9 mit dem Zweig 4 des Stromversorgungskreises verbindet. Der Zweig 4 steht dabei noch über den ersten Schaltkontakt 5 mit dem Stromversorgungsnetz 2 in Verbindung. Durch das mit der Relaisspule 9 erregte Relais wird der zweite Schaltkontakt 6 geschlossen und der erste Schaltkontakt 5 braucht nicht mehr geschlossen zu bleiben und kann seinen Ruhezustand annehmen. Bis zur nächsten Betätigung der Taste 10 bleibt der Zweig 4 an den nicht abschaltbaren Zweig 3 bzw. das Stromversorgungsnetz 2 angeschlossen. Damit ist auch die Hauptsteuereinheit 7 weiterhin in Betrieb und kann die Funktionseinheit 8 steuern.

Die Funktionseinheit 8 kann ein Signal in die Hauptsteuereinheit 7 abgeben, welches die Beendigung der jeweiligen Funktionen signalisiert und bei einem nachfolgenden Abschaltvorgang der Getränkebereitungsmaschine berücksichtigt wird.

Zum Abschalten der Getränkebereitungsmaschine ist die Taste 10 erneut, d.h. ein zweites Mal in der Betätigungsfolge zu betätigen, wodurch der erste Schaltkontakt 5 wiederum die in Figur 1 dargestellte Ruhelage verlässt und der von ihm kurzzeitig getrennte Steuerkontakt 12 ein weiteres Betätigungssignal an den Eingang der Hauptsteuereinheit 7 abgibt, welches als zweites Betätigungssignal in der Steuereinheit 7 registriert werden kann. Dadurch wird weiterhin in der Hauptsteuereinheit 6 das Steuersignal auf der

Steuerleitung 13 entsprechend geändert, so dass dieses die Abschaltung der Relaisspule 9 bewirkt. Demzufolge fällt der zweite Schaltkontakt 6 als Relaiskontakt ab, so dass der abschaltbare Zweig 4 von dem nicht abschaltbaren Zweig 3 bzw. dem Stromversorgungsnetz 2 getrennt ist.

Damit ist die Elektronikeinheit 14 der Getränkebereitungsmaschine, die die Hauptsteuereinheit 7 und das Relais mit der Relaisspule 9 umfasst, für einen erneuten Einschaltvorgang bei Betätigung der Taste 10 bereit.

Die Elektronikeinheit 14 kann weiterhin mit einer in Figur 1 nicht dargestellten Akkueinheit erweitert sein, aus der eine ebenfalls nicht dargestellte Echtzeituhr und die Steuereinheit 7 gespeist werden, wenn der abschaltbare Zweig 4 des Stromversorgungskreises von dem Stromversorgungsnetz 2 abgetrennt ist. Damit kann bei vollständig von dem nicht abschaltbaren Zweig 3 bzw. dem Stromversorgungsnetz 2 getrennten abschaltbaren Zweig 4 die Getränkebereitungsmaschine 1 automatisch gestartet werden, indem die Echtzeituhr ein entsprechendes Startsignal abgibt, das der in der Hauptsteuereinheit 7 in ein Steuersignal auf der Steuerleitung 1 3 umgesetzt wird, so dass die Relaisspule 9 erregt wird und den zweiten Schaltkontakt 6 schließt, der die weitere Stromversorgung der Getränkebereitungsmaschine aus dem Stromversorgungsnetz 2 aktiviert. Die Hauptsteuereinheit 7 kann dann wiederum über die Funktionssteuerleitung 15 Funktionssteuersignale an die Funktionseinheit 8 abgeben, mit der die gewünschten Funktionen beispielsweise zur Kaffeezubereitung selbsttätig durchgeführt werden.

Zu der Akkueinheit kann eine Ladevorrichtung gehören, die ebenfalls in Figur 1 nicht dargestellt ist.

### Bezugszeichenliste

- 1: Elektrischer Teil einer Getränkebereitungsmaschine
- 2: (externes) Stromversorgungsnetz
- 3: nicht abschaltbarer Zweig
- 4: abschaltbarer Zweig
- 5: 1. Schaltkontakt
- 6: 2. Schaltkontakt
- 7: Hauptsteuereinheit
- 8: Funktionseinheit
- 9: Relaisspule mit Ansteuerung
- 10: Taste
- 11: Stromversorgungskontakt
- 12: Steuerkontakt
- 13: Steuerleitung
- 14: Elektronikeinheit
- 15: Funktionssteuerleitung

## Patentansprüche

1. Elektrische Getränkebereitungsmaschine mit einer Steuereinheit (7), mit mindestens einer elektrischen Funktionseinheit (8) zur Durchführung mindestens eines zum Bereiten des Getränks beteiligten Prozesses, wobei die Steuereinheit (7) mit der mindestens einen Funktionseinheit (8) in signalübertragender Verbindung steht, mit einem Stromversorgungskreis (3, 4) zur Stromversorgung der Funktionseinheit (8) und der Steuereinheit (7), in dem ein erster mit einem Betätigungselement (10) betätigbarer Schaltkontakt (5) mit einem Stromversorgungskontakt (11), der mit dem Stromversorgungskreis (3, 4) verbunden ist, sowie parallel zu dem ersten Schaltkontakt (5) ein zweiter Schaltkontakt (6) angeordnet ist, der durch die Steuereinheit (7) betätigbar ist, wobei Erfassungsmittel, die mit der Taste (10) betätigbar sind, mit der Steuereinheit (7) in signalübertragender Verbindung stehen,
**dadurch gekennzeichnet,**
**dass** der erste Schaltkontakt (5) als Wechselkontakt mit dem Stromversorgungskontakt (11) und einem wechselweise zu dem Stromversorgungskontakt (11) kontaktierbaren Steuerkontakt (12) ausgebildet ist, der ein mit einem Eingang der Steuereinheit (7) in Verbindung stehendes Erfassungselement der Erfassungsmittel ist.

2. Getränkebereitungsmaschine nach Anspruch 1,
**dadurch gekennzeichnet,**
**dass** der mit der Taste (10) betätigbare erste Schaltkontakt (5) dergestalt als Wechseltastkontakt ausgebildet ist, dass er bei nicht betätigter Taste (10) den Steuerkontakt (12) kontaktiert und den Stromversorgungskontakt (11), der an den Stromversorgungskreis (3, 4), vorzugsweise an einen nicht abschaltbaren Zweig (3) des Stromversorgungskreises angeschlossen ist, nicht kontaktiert, und der bei betätigter Taste (10) den Stromversorgungskontakt (11) kontaktiert und den Steuerkontakt (12) dementsprechend nicht kontaktiert.

3. Getränkebereitungsmaschine nach Anspruch 2,
**dadurch gekennzeichnet,**
**dass** der Stromversorgungskontakt (11) des ersten Schaltkontakts (5) als Tastkontakt ausgebildet ist.

4. Getränkebereitungsmaschine nach einem der Ansprüche 1 - 3,
**dadurch gekennzeichnet,**
**dass** die Erfassungsmittel (12) und die mit diesen in signalübertragender Verbindung stehende Steuereinheit (7) geeignet sind, dass in der Steuereinheit (7) eine Betätigungsabfolge der Taste (10) registriert wird,
**dass** die Steuereinheit (7) jeweils nach Registrierung einer ersten von zwei aufeinanderfolgenden Betätigungen ein Steuersignal erzeugt, durch das der zweite Schaltkontakt (6) geschlossen wird, und dass die Steuereinheit (7) jeweils nach Registrierung einer zweiten von zwei aufeinanderfolgenden Betätigungen und abhängig von dem Funktionszustand der mindestens einen Funktionseinheit (8) und/oder zeitlich verzögert ein Steuersignal generiert, durch das der zweite Schaltkontakt (6) geöffnet wird.

5. Getränkebereitungsmaschine nach einem der Ansprüche 1 - 4,
**dadurch gekennzeichnet,**
**dass** der zweite Schaltkontakt (6) der Schließkontakt eines Relais ist.

6. Getränkebereitungsmaschine nach Anspruch 5,
**dadurch gekennzeichnet,**
**dass** eine Relaisspule (9) des Relais über eine Steuerleitung (13) und gegebenenfalls über einen gesteuerten Schalter mit einem Ausgang der Steuereinheit (7) in Verbindung steht und durch das Steuersignal gesteuert erregbar ist.

7. Getränkebereitungsmaschine nach Anspruch 4,
**dadurch gekennzeichnet,**
**dass** der zweite Schaltkontakt ein Halbleiterschalter ist, der über eine Steuerleitung ((13) durch das Steuersignal steuerbar ist.

8. Getränkebereitungsmaschine nach einem der vorangehenden Ansprüche,
**dadurch gekennzeichnet,**
**dass** die Steuereinheit (7) eine Hauptsteuereinheit (MCU) ist.

9. Getränkebereitungsmaschine nach einem der vorangehenden Ansprüche,
**gekennzeichnet durch**
eine Akkueinheit, aus der die Steuereinheit (7) und eine Echtzeituhr vor einer ersten Betätigung des Betätigungselements alternativ zum Stromnetz gespeist ist und
dass die Steuereinheit (7) geeignet ist, derart mit der Echtzeituhr zusammenzuwirken, dass die Getränkebereitungsmaschine (1) **durch** die Steuereinheit und die Echtzeituhr gestartet wird.

## Claims

1. Electric beverage making machine comprising a control unit (7), at least one electric function unit (8) for performing at least one process which takes part in the making of the beverage, said control unit (7) being connected with at least one function unit (8) in a signal-transferring manner, a power supply circuit (3, 4) for the power supply to said function unit (8) and said control unit (7), in which a first switching contact (5) actuated by an actuation element (10) having a power supply contact (11) which is connected with said power supply circuit (3, 4), and parallel to said first switching contact (5) a second switching contact (6) is provided which is actuated by said control unit (7), wherein detecting means actuated by key (10) are connected in a signal-transferring manner with said control unit (7)
**characterized in**
**that** said first switching contact (5) is a two-way contact having said power supply contact (11) and a control contact (12) which can alternatingly make contact with said power supply contact (11) and which constitutes a detecting element of said detecting means connected with the input of said control unit (7).

2. Beverage making machine according to claim 1,
**characterized in**
**that** said first switching contact (5) to be actuated by said key (10) is a two-way key contact which contacts said control contact (12) when said key (10) is not actuated, and does not contact said power supply contact (11) which is connected to said power supply circuit (3, 4), preferably to a non-disconnectible branch (3) of said power supply circuit, and which contacts said power supply contact (11) when said key (10) is actuated, and does not, correspondingly, contact said control contact (12).

3. Beverage making machine according to claim 2,
**characterized in**
**that** said power supply contact (11) of said switching contact (5) is a key contact.

4. Beverage making machine according to one of claims 1 to 3,
**characterized in**
**that** said detecting means (12) and said control unit (7) connected therewith in a signal-transferring manner are suited to provide that in said control unit (7) an actuation sequence of said key (10) is recorded,
**that** said control unit (7), each time after recording a first one of two subsequent actuations, generates a control signal by which said second switching contact (6) is closed, and
**that** said control unit (7), each time after recording a second one of two subsequent actuations and depending on the function state of said at least one function unit (8) and/or delayed, generates a control signal by which said second switching contact (6) is opened.

5. Beverage making machine according to one of claims 1 to 4,
**characterized in**
**that** said second switching contact (6) is the closing contact of a relay.

6. Beverage making machine according to claim 5,
**characterized in**
**that** one relay coil (9) of said relay is connected via a control line (13) and, if necessary, via a controlled switch with one output of said control unit (7) and can be energized by said control signal.

7. Beverage making machine according to claim 4,
**characterized in**
**that** said second switching contact is a semiconductor switch which can be controlled by said control signal via a control line (13).

8. Beverage making machine according to one of the foregoing claims,
**characterized in**
**that** said control unit (7) is a main control unit (MCU).

9. Beverage making machine according to one of the foregoing claims,
**characterized by**
an accumulator unit from which said control unit (7) and a real-time clock are fed prior to a first actuation of said actuation element, as an alternative to the mains supply, and
that said control unit (7) is suited to cooperate with said real time clock so that said beverage making machine (1) is started by said control unit and said real time clock.

## Revendications

1. Machine électrique pour la préparation de boissons comportant une unité de commande (7), au moins une unité fonctionnelle électrique (8) destinée à l'exécution d'un processus participant à la préparation de la boisson, l'unité de commande (7) étant en relation de transmission de signaux avec ladite unité fonctionnelle (8) au moins au nombre de une, un circuit d'alimentation en courant (3, 4) destiné à l'alimentation en courant de l'unité fonctionnelle (8) et de l'unité de commande (7), cependant qu'un premier contact de commutation (5) est prévu, qui peut être actionné par un élément d'actionnement (10) et qui comporte un contact d'alimentation en courant (11) relié au circuit d'alimentation en courant (3, 4), et qu'un deuxième contact de commutation (6) qui peut être actionné par l'unité de commande (7) est disposé en parallèle avec le premier contact de commutation (5), des moyens de collecte de données pouvant être actionnés par la touche (10) étant en relation de transmission de signaux avec l'unité de commande (7),
**caractérisée en ce que**
le premier contact de commutation (5) est conçu en tant que contact inverseur avec le contact d'alimentation en courant (11) et avec un contact de commande (12) pouvant être mis en contact en alternance avec le contact d'alimentation en courant (11), et qui est un élément de collecte de données des moyens de collecte de données en relation avec une entrée de l'unité de commande (7).

2. Machine pour la préparation de boissons selon la revendication 1, **caractérisée en ce que** le premier contact de commutation (5) pouvant être actionné par la touche (10) est réalisé sous la forme d'un contact inverseur à touche de telle sorte que, lorsque la touche (10) n'est pas actionnée, il établit le contact avec le contact de commande (12) et n'établit pas le contact avec le contact d'alimentation en courant (11) qui est connecté au circuit d'alimentation en courant (3, 4), de préférence à une branche (3) du circuit d'alimentation en courant qui ne peut pas être déconnectée et que, lorsque la touche (10) est actionnée, il établit le contact avec le contact d'alimentation en courant (11) et, par conséquent, n'établit pas le contact avec le contact de commande (12).

3. Machine pour la préparation de boissons selon la revendication 2, **caractérisée en ce que** le contact d'alimentation en courant (11) du premier contact
de commutation (5) est un contact de type tactile.

4. Machine pour la préparation de boissons selon l'une des revendications 1 à 3, **caractérisée en ce que** les moyens de collecte de données (12) et l'unité de commande (7) qui est en relation de transmission de signaux avec eux sont appropriés pour qu'une suite d'actionnements de la touche (10) soit enregistrée dans l'unité de commande (7),
**en ce qu'**après chaque enregistrement d'un premier de deux actionnements successifs, l'unité de commande (7) génère un signal de commande sous l'effet duquel le deuxième contact de commutation (6) se ferme, et
**en ce qu'**après chaque enregistrement d'un deuxième de deux actionnements successifs, et en fonction de l'état fonctionnel de ladite unité fonctionnelle (8), au moins au nombre de une, et/ou en fonction d'une temporisation, l'unité de commande (7) génère un signal de commande sous l'effet duquel le deuxième contact de commutation (6) s'ouvre.

5. Machine pour la préparation de boissons selon l'une des revendications 1 à 4, **caractérisée en ce que** le deuxième contact de commutation (6) est le contact de fermeture d'un relais.

6. Machine pour la préparation de boissons selon la revendication 5, **caractérisée en ce qu'**une bobine de relais (9) du relais est en relation avec une sortie de l'unité de commande (7) par l'intermédiaire d'une ligne de commande (13) et éventuellement par l'intermédiaire d'un commutateur commandé, et peut être excitée de façon commandée par le signal de commande.

7. Machine pour la préparation de boissons selon la revendication 4, **caractérisée en ce que** le deuxième contact de commutation est un commutateur à semi-conducteur qui peut être commandé par le signal de commande par l'intermédiaire d'une ligne de commande (13).

8. Machine pour la préparation de boissons selon l'une des revendications précédentes, **caractérisée en ce que** l'unité de commande (7) est une unité de commande principale (MCU).

9. Machine pour la préparation de boissons selon l'une des revendications précédentes, **caractérisée par** une unité d'accumulateur par laquelle l'unité de commande (7) et une horloge en temps réel sont alimentées, au lieu de l'être par le réseau avant le premier actionnement de l'élément d'actionnement,
et en ce que l'unité de commande (7) est appropriée pour coopérer avec l'horloge en temps réel de telle manière que la machine pour la préparation de boissons (1) soit misse en marche par l'unité de commande et par l'horloge en temps réel.
